# EUROPEAN PATENT SPECIFICATION

(11) **EP 1 855 915 B1**
(45) Date of publication and mention of the grant of the patent: **11.02.2009**
(21) Application number: 06709854.1
(22) Date of filing: 23.02.2006
(51) Int. Cl.: B60R 5/04

(54) **PARCEL SHELF**
PAKETREGAL
ETAGERE POUR COLIS

(30) Priority: 26.02.2005 GB 0504002
(43) Date of publication of application: 21.11.2007
(73) Proprietor: NISSAN MOTOR MANUFACTURING (UK) LTD, Bedfordshire MK43 0DB (GB)
(72) Inventor: NEALE, Brian Nissan Technical Centre Europe Ltd, Bedfordshire MK43 0DB (GB); BICKERS, Simon Nissan Technical Centre Europe Ltd, Bedfordshire MK43 0DB (GB)
(74) Representative: Hufton, Victoria Alice
(86) International application number: PCT/GB2006/000621
(87) International publication number: WO 2006/090145

(56) References cited:
- US-A- 5 083 828
- US-A- 6 092 708
- US-B1- 6 224 128

## Description

The present invention relates to a parcel shelf and particularly, but not exclusively, to an adjustable parcel shelf for use in the luggage compartment of a vehicle such as an automobile.

Parcel shelves are generally rigid platforms of fixed dimensions that conceal the contents of the luggage compartment of a vehicles such as an automobile. Conventionally, the parcel shelf is, in use, supported at a fixed height within the vehicle between the side trim panels of the luggage compartment and is held in place by one or more clips. In most cases, the parcel shelf is supported at a height within the luggage compartment such that the upper surface of the shelf is substantially flush with the top of the rear seat cushion.

In addition to concealing the contents of the luggage compartment, the parcel shelf also functions to support relatively small, lightweight items such as road maps or umbrellas and may be constructed to withstand a loading of several kilograms.

In most vehicles, the parcel shelf is arranged to be removable from the vehicle in order to increase the effective height of the luggage compartment. To achieve this, the clips retaining the parcel shelf in position are usually releasable, permitting the parcel shelf to be removed from the vehicle through the luggage compartment opening.

A problem associated with existing parcel shelves is that they can be difficult to remove from the vehicle, particularly from vehicles in which the luggage compartment opening is narrower than the luggage compartment itself. This may occur where so-called "wrap-around" rear lamps are employed on the vehicle or where certain styling restrictions apply due to vehicle type.

In these cases, it can be difficult to remove the parcel shelf from the luggage compartment since it will not fit through the luggage compartment opening without the shelf being tilted or rotated. Owing to the size and weight of most parcel shelves, this can be awkward and time-consuming for the vehicle user.

US 6 092 708 A1 discloses a parcel shelf for a vehicle according to the preamble of claim 1 in that it shows a parcel shelf made up of a plurality of shelf members joined together in such a way as to permit adjustment of the overall length of the parcel shelf.

It is an aim of the invention to provide an improved parcel shelf that addresses this and other disadvantages of existing parcel shelves. Other aims of the invention will become apparent from the following description.

According to one aspect of the present invention, therefore, there is provided a parcel shelf for a vehicle the parcel shelf comprising a plurality of shelf members, the shelf members being movable relative to one another thereby to adjust the width of the parcel shelf, between a first, extended position and a second, reduced-width position, the parcel shelf further comprising biasing means for biasing the shelf members towards the first position.

In the first, extended position of the parcel shelf, the width of the parcel shelf may be substantially equal to the width of the luggage compartment in which the shelf is to be used. In the second, reduced-width position of the parcel shelf, the width of the parcel shelf may be equal to or less than the width of the luggage compartment opening. By reducing the width of the parcel shelf to less than that of the luggage compartment opening, the shelf can be removed easily from the vehicle.

The parcel shelf may include at least one support bar for supporting the shelf members, the shelf members being slidably mounted on the support bar for movement between the first and second positions.

At least a portion of the or each support bar may be located within guide means formed in each shelf member, the guide means being arranged to permit relative sliding movement between the shelf members and the or each support bar.

In one embodiment, the guide means comprises at least one channel disposed in the underside of each shelf member. The parcel shelf may further comprise retaining means for retaining the support bar in the guide means. In one embodiment, the retaining means comprises a tube or cylinder disposed within the guide means and through which the support bar, in use, extends.

In another embodiment, the guide means comprises a tube or cylinder formed within each shelf member.

In another embodiment, the biasing means comprises a compression spring or the like which acts between a support bar and a respective one of the shelf members. Advantageously, the compression spring is disposed within the guide means.

The parcel shelf may comprise locking means for selectively locking the shelf members in the first or second position of the parcel shelf.

The present invention will now be described, by way of example only, with reference to the accompanying drawings in which:
Figure 1 is a plan view of a known vehicle parcel shelf;
Figure 2 is a section through the luggage compartment of a vehicle illustrating the parcel shelf of Figure 1 in use;
Figure 3 is an inverse plan view of a first form of parcel shelf embodying the invention in a first, extended position;
Figure 4 is an inverse plan view of the parcel shelf of Figure 3 in a second, reduced-width position;
Figure 5 is an inverse plan view of a second form of parcel shelf embodying the invention;
Figure 6 is an inverse plan view of a third form of parcel shelf embodying the invention;
Figures 7a and 7b are cross sectional views through a shelf member optionally forming part of the invention;
Figure 8 is a section through the luggage compartment of a vehicle illustrating an alternative positioning for the parcel shelves of Figures 3 - 6; and
Figures 9a and 9b illustrate a modification to the parcel shelves of Figures 3 - 6.

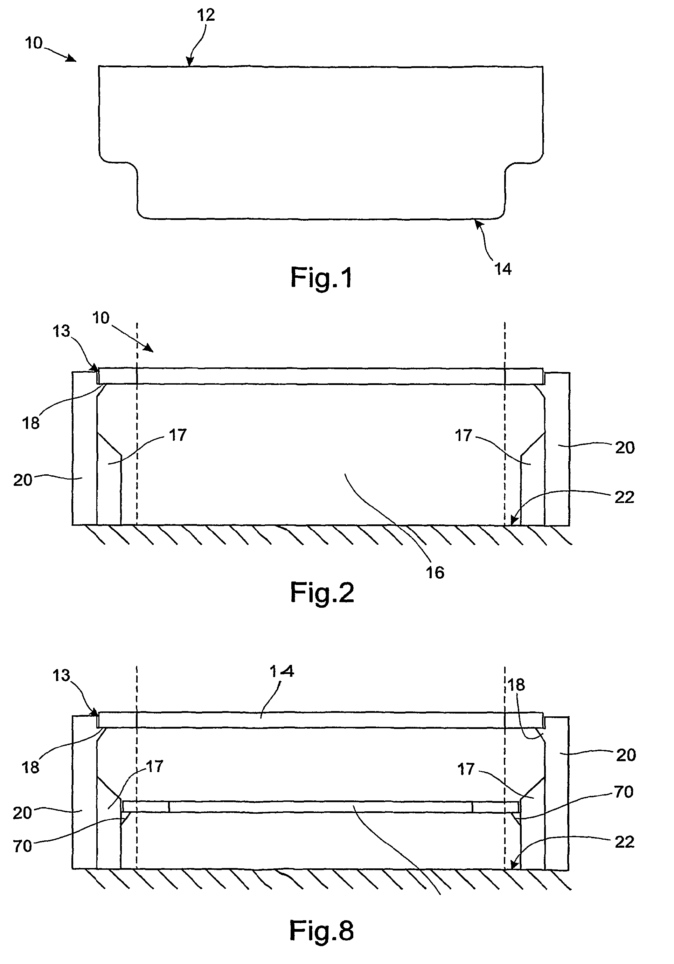

Referring firstly to Figure 1, a known parcel shelf is shown in plan view generally at 10. The parcel shelf 10 consists of a generally rectangular board or platform, formed from a rigid or semi-rigid material such as ABS or PTFE, and is shaped to conform to the cross-section of the luggage compartment of the vehicle in which the shelf is to be fitted.

In particular, the illustrated shelf 10 is adapted for use in a vehicle in which the luggage compartment opening is narrower in width than the luggage compartment proper. As illustrated, the parcel shelf 10 is wider at its front or leading edge 12 than at its rear or trailing edge 14, the side edges 13 of the parcel shelf being stepped inwardly towards the trailing edge 14. The width of the leading edge 12 of the parcel shelf is comparable to the width of the vehicle luggage compartment whilst that of the trailing edge 14 is comparable to the width of the luggage compartment opening.

Although not clearly shown in the drawings, the upper surface of the shelf 10 is trimmed in an aesthetically pleasing material, such as a felt or other fabric, to improve the appearance and perceived quality of the vehicle interior.

Figure 2 is a cross-sectional view through a vehicle luggage compartment 16 showing the parcel shelf 10 *in situ.* The luggage compartment 16 has a floor 22, representing a load bearing surface on which luggage or other items can be placed, and opposing side walls formed by side trim panels 20. A lower region of each side trim panel 20 extends partially into the luggage compartment 16 to accommodate the wheel arches 17 of the vehicle.

As illustrated, in use the parcel shelf 10 effectively covers the vehicle luggage compartment 16 and is supported at its side edges 13 by means of ledges 18 which project inwardly into the luggage compartment 16 from the side trim panels 20. The ledges 18 support the shelf 20 above, and generally parallel to, the floor 22 of the luggage compartment 16. This has the effect of concealing the contents of the luggage compartment from persons looking into the vehicle through the windows and represents an effective deterrent to thieves.

In some circumstances it may be desirable to remove the parcel shelf 10 completely from the vehicle, for example to increase the effective volume of the luggage compartment 16, the height of which is limited when the parcel shelf 10 is in place. It will be appreciated, however, that since the forward portion of the parcel shelf 10 is of significantly greater width than the luggage compartment opening (denoted by the dashed lines in Figure 2), removal of the parcel shelf 10 through the opening may be hindered.

In practice, it is usually necessary for the user to lift the parcel shelf 10 from the ledges 18 and then tilt and/or rotate the shelf until it is in an orientation which permits extrication through the luggage compartment opening. This can be awkward and time consuming for the user.

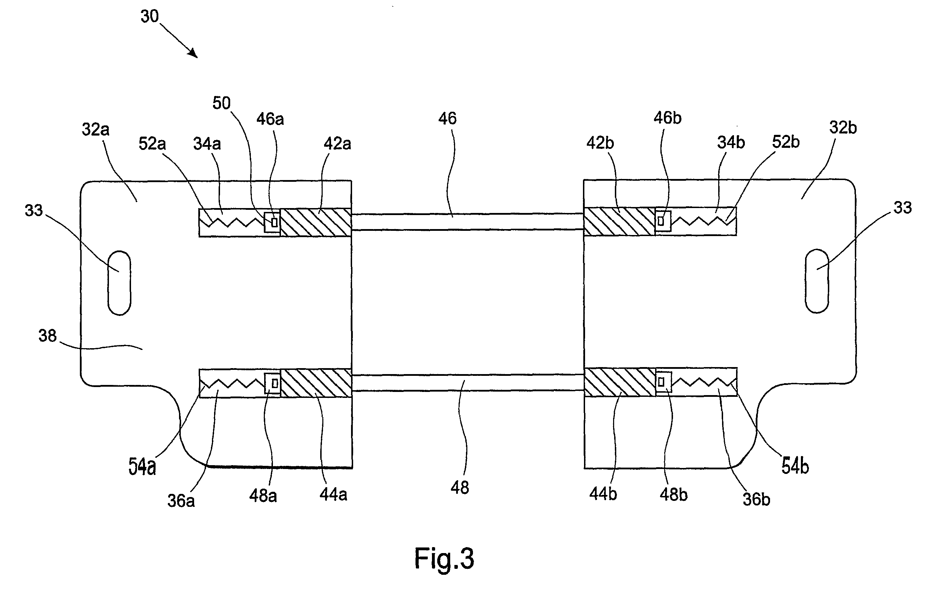

Referring next to Figure 3, a first form of parcel shelf embodying the invention is shown, in inverse plan view, generally at 30. The parcel shelf 30 comprises two shelf members 32a, 32b formed from a generally rigid material such as PTFE, ABS or the like. The shelf members 32a, 32b are substantially identical and, for simplicity, only the first shelf member 32a is described in detail bellow.

The first shelf member 32a includes guide means in the form of two channels 34a, 36a formed in its lower surface 38, each channel 34a, 36a extending substantially parallel to the leading edge 12 of the parcel shelf from an inner edge 40 thereof. Each channel 34a, 36a is closed along a portion of its length adjacent the inner edge 40 of the shelf member to form a cylindrical guide. In the illustrated embodiment, each cylindrical guide is formed from an openended tube 42a, 44a which is seated within the respective channel 34a, 36a and extends along approximately one half of the length of the channel.

A hand grip, in the form of an oval or elongate aperture 33, is formed in the shelf member 32a to assist in removing the parcel shelf from the vehicle, as described below.

The second shelf member 32b is substantially identical in shape and configuration to the first shelf member 32a but is reversed such that, in use, the shelf members are arranged symmetrically and define in plan view a shape similar to that of the known parcel shelf described with reference to Figure 1 above.

The shelf members 32a, 32b are conjoined by support means in the form of two rigid support bars 46, 48 extending therebetween. One end 46a of the first support bar 46 extends into the channel 34a formed in the first shelf member 32a through the tube 42a. The other end 46b of the first support bar 46 extends into the channel 34b formed in the second shelf member 32b through the tube 42b.

Similarly, one end 48a of the second support bar 48 extends into the channel 36a formed in the first shelf member 32a through the tube 44a. The other end 48b of the second bar 48 extends into the channel 36b formed in the second shelf member 32b through the tube 44b.

It will be understood from the foregoing that the shelf members 32a, 32b are able to slide along the support bars 46, 48 towards each other, each support bar extending further into its respective channel as the shelf members 32a, 32b are brought closer together. By moving the shelf members 32a, 32b closer together, the overall width of the parcel shelf is reduced. Conversely, the overall width of the parcel shelf 30 can be maximised by moving the shelf members 32a, 32b further apart.

Figure 3 illustrates the parcel shelf 30 in a first, extended position which represents the configuration of the shelf in its normal use. In this position, and considering again only the first shelf member 32a, it can be seen than the ends 46a, 48a of the support bars 46, 48 protrude into the open portion of each channel 34a, 36a from the ends of the tubes 42a, 44a by a relatively small amount.

In order to prevent the support bars 46, 48 from sliding fully out of the tubes 42a, 44a, each support bar is provided with end stop fixings 50 which abut against the end of the respective tubes 42a, 44a when the parcel shelf is in the extended position. A similar configuration is adopted by the second shelf member 32b.

In this extended position, the dimensions of the parcel shelf 30 are similar to those of the known parcel shelf 10 shown in Figure 1, the overall width thus corresponds to the width of the luggage compartment 16 of the vehicle to which the parcel shelf is to be fitted.

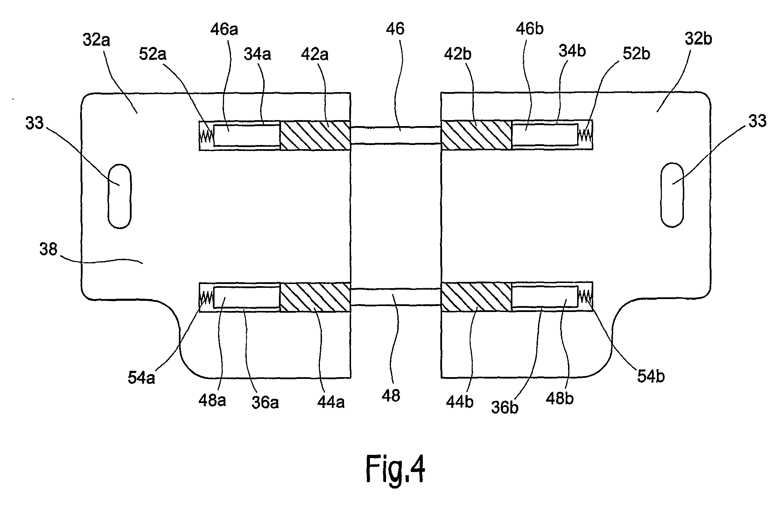

In Figure 4, the parcel shelf 30 is shown in a second position in which the distance between the shelf members 32a, 32b has been reduced by sliding the shelf members towards each other along the support bars 46,48. In this second, reduced-width position, it can be seen that the ends of the support bars 46, 48 extend significantly further into the channels 34a, 34b, 36a, 36b.

Biasing means are provided to bias the parcel shelf members 32a, 32b towards the first, extended position shown in Figure 3 . In the illustrated embodiment, a respective compression spring 52a, 52b, 54a, 54b is disposed within each channel 34a, 34b, 36a, 36b between the end of the corresponding support bar 46, 48 and the closed end of the channel. Each spring is arranged to exert a force between the support bar and the shelf member so as to bias the shelf members 32a, 32b apart.

In use, the parcel shelf 30 is initially in its natural, extended condition and is supported above the vehicle luggage compartment 16 by means of the projecting ledges 18 in a manner substantially identical to that shown with reference to Figure 2. In this condition, the parcel shelf 30 extends across the full width of the luggage compartment 16 between the side trim panels 20, thereby concealing the contents of the luggage compartment.

In order to remove the parcel shelf 30 from the vehicle, the user grasps the shelf members using the hand grips 33 and compresses the parcel shelf members 32a, 32b together. The shelf members 32a, 32b thus slide towards each other along the support bars 46, 48 against the compressive force of the springs 52a, 52b, 54a, 54b. As the distance between the shelf members 32a, 32b reduces, the overall width of the parcel shelf decreases.

When the width of the parcel shelf 30 is approximately equal to or less than that of the luggage compartment opening, the user is able simply to withdraw the parcel shelf 30 through the opening without the need for tilting or twisting of the shelf.

It can be seen that the present invention provides a simple and inexpensive, yet highly effective solution to the problem of parcel shelf removal. By forming the parcel shelf from two individual members which are movable relative to one another, the width of the parcel shelf can be adjusted to less than that of the luggage compartment opening, permitting the parcel shelf to be easily withdrawn therethrough.

Nevertheless, it will be appreciated that a number of modifications can be made to the invention without departing from the scope thereof which is limited only by the claims appendant hereto.

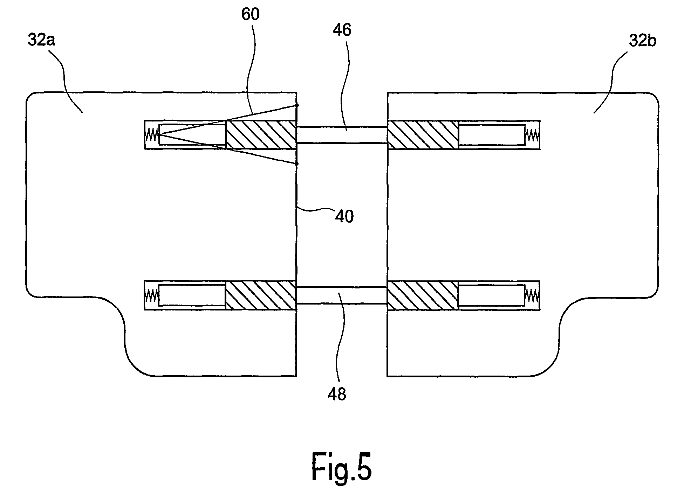

For example, as shown in Figure 5 (in which the parcel shelf is shown in the compressed condition), each compression spring 52a, 52b, 54a, 54b may be replaced by a tensile, elastic member 60, such as a length of rubber or a tension spring (only one of which is shown). In this case, it will be understood that one end of the elastic member 60 is fixed to the corresponding end of the support bar 46, 48 while the other end is attached to the respective shelf member 32a, 32b at or adjacent an inner edge 40 thereof. Here, tension in the elastic member 60 acts to bias the shelf members apart, towards the first, extended position.

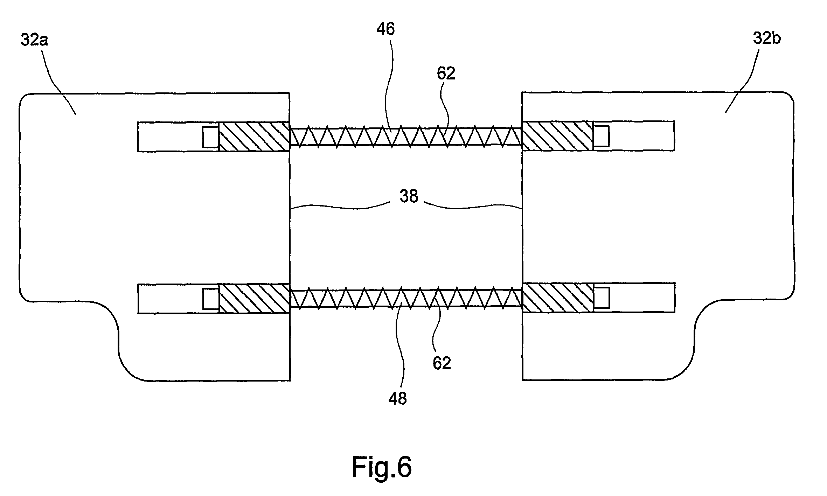

A further alternative is shown in Figure 6 in which the parcel shelf is shown in the first, extended position. In this embodiment, each support bar 46, 48 extends through an elongate compression spring 62, the ends of which abut the opposing inner edges 40 of the shelf members. Here, the compressive force in the springs 62 biases the shelf 30 towards the extended position.

It is also envisaged that the compression springs 52a, 52b, 54a, 54b may be replaced by a compressible, elastomeric member such as a rubber or foam block or the like.

It will be appreciated that the mechanical resistance of the compression springs 52a, 52b, 54a, 54b, 62 or the elastic members 60 should be low enough to enable the user to compress the shelf members 32a, 32b together without excessive difficulty but sufficiently great to maintain the parcel shelf 30 in its fully expanded position absent any applied compression. This ensures that the parcel shelf is able to retain its seating on the ledges 18 projecting from the side trim panels 20.

In one embodiment (not shown) means are provided for locking the parcel shelf 30 in its expanded position to maintain its seating on the ledges 18. For example, the lower surface 38 of each parcel shelf member 32a, 32b may include a hole or recess at or adjacent an outer edge 41 thereof for engagement with a corresponding projection disposed on the upper surface of each ledge 18. Engagement of the projection in the hole prevents the shelf from being compressed, thereby reducing the likelihood of the shelf collapsing when items are placed on it.

Alternatively, a suitable locking mechanism (not shown) could be provided to selectively lock the parcel shelf 30 in a desired position. For example, a cam device could be provided in association with the ends of the support bars 46, 48. Each cam device may consist of a handle rotatably fixed to the lower surface of each shelf member. A cam surface is disposed at one end of the handle and arranged such that, when the handle is rotated by the user, the cam surface bears against the support bar 46, 48. The friction between the cam surface and the support bar effectively locks the support bar relative to the shelf member and hence maintains the shelf 30 in the desired position. Such devices may provided at both ends of each support bar 46, 48 or at the ends of only one support bar, as desired. Such cam devices are well known for locking telescopically connected parts.

It will be appreciated that the primary purpose of the tubes 42a, 42b, 44a, 44b is to retain the support bars 46, 48 within their respective channels 34a, 34b, 36a, 36b, thereby maintaining the rigid structure of the parcel shelf 30. However, the use of discrete tubes seated in the channels is not essential and any suitable means may be provided for retaining the support bars 46, 48 in the channels whilst permitting relative sliding movement between the shelf members 32a, 32b and the support bars.

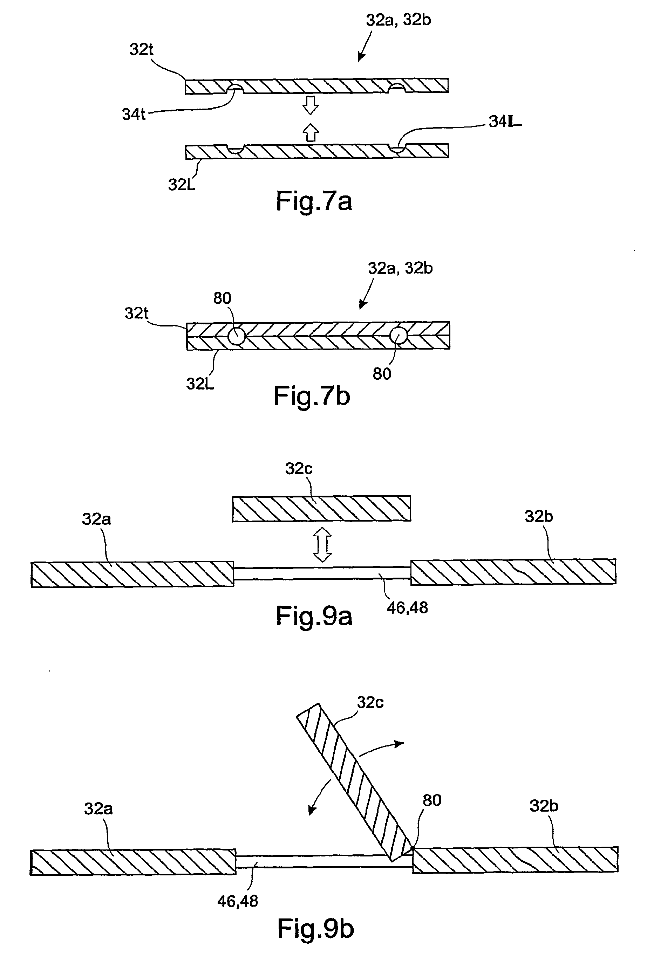

For example, the cross section of each channel 34a, 34b, 36a, 36b may be C-shaped so as to retain the respective support bar 46, 48 therein but still permit sliding movement of the bar within the channel. Alternatively, and as illustrated in Figures 7a and 7b, each shelf member 32a, 32b may be formed from two "layers", the upper surface of one layer 321 and the lower surface of the other layer 32t including opposing hemi-cylindrical channels 341, 34t which, when placed together, define parallel cylindrical tubes 80 within which the support bars 46, 48 slide.

Since the width of the parcel shelf 30 is adjustable, it is envisaged that it could be used in other positions within the vehicle luggage compartment 16. For example, in many automobiles the width of the luggage compartment is reduced near to the luggage compartment floor 22 owing to the presence of the wheel arches 17 intruding into the luggage space, as illustrated in Figure 8. By providing further ledges 70 on the side trim panels 20 covering the wheel arches 17, the parcel shelf 30 can, in its reduced-width condition, be supported in an alternative position within the luggage compartment 16. In Figure 8, such an alternative position sees the parcel shelf 30 supported at an intermediate position between the floor of the luggage compartment and its normal position level with the top of the rear seats.

The upper surface of each shelf member 32a, 32b may be trimmed or covered, in known manner, to provide an aesthetically pleasing surface. In one embodiment, the parcel shelf 30 is trimmed across its full upper surface so that the gap between the shelf members 32a, 32b is also covered, giving the appearance of a continuous surface, similar to that of a conventional parcel shelf. The surface covering may be arranged such that in the extended position of the parcel shelf, the covering is pulled taut, presenting a substantially flat upper surface.

If a non-elastic material, such as a felt or other fabric, is used as the surface covering, the material may be arranged to fold or corrugate when the parcel shelf 30 is contracted into its reduced-width position. On the other hand, an elastic material, such as lycra, may be used to trim the parcel shelf. In this case, the elasticity of the material permits the surface covering to maintain a smooth, generally ripple-free surface at both maximum and minimum widths of the parcel shelf.

It will be appreciated that, even where a continuous surface covering is provided, it may not be possible to place items on the centre of the parcel shelf. Since, in the embodiments of Figures 3 - 6, there is no solid surface in the centre region of the parcel shelf 30, any significant weight bearing down on the surface material may cause unintentional contraction of the shelf members 32a, 32b. An exception to this may be where the parcel shelf 30 can be locked in the extended position, as described above, thereby ensuring the surface covering remains taut at all times. In this case, items may be placed on the centre section of the parcel shelf without risk of contraction of the shelf.

In an alternative embodiment, shown in Figures 9a and 9b, a third shelf member 32c is provided which is sized and shaped to locate between the first and second shelf members 32a, 32b in the extended position of the parcel shelf 30. This third, centre shelf member 32c may be formed from the same generally rigid material as the first and second shelf members 32a, 32b, thereby to provide a solid, load bearing centre section for the shelf, and may be trimmed in the same material. The centre section 32c may be provided with parallel channels (not shown) on its lower surface, corresponding to those of the first and second shelf members 32a, 32b, into which the support bars 46, 48 are seated.

While the third shelf member 32c may be a discreet, separate attachment, which can be inserted and removed as required, as shown in Figure 9a, in another embodiment (Figure 9b) the centre shelf member 32c is attached to the second shelf member 32b along one side by means of a hinge 80. In this embodiment, when the parcel shelf 30 is to be removed from the vehicle, the centre section is hinged upwardly and laid on the second shelf member 32b. The parcel shelf 30 can then be compressed in the manner described above and removed through the luggage compartment opening.

The shelf members 32a, 32b can be formed from any suitable material including medium- or high-density foam, plastics or laminated board.

Where the support bars 46, 48 are exposed beneath the parcel shelf, for example in the embodiment of Figure 3, they may advantageously be employed to support items beneath the parcel shelf. For example, hooks, coat hangers or other support members may be provided for attachment to the support bars 46, 48. In this way, shopping bags, coats or other items can be hung underneath the parcel shelf 30 as desired.

The apertures 33 representing the hand grips for the parcel shelf may be replaced by strap grips or any other suitable devices.

## Claims

1. A parcel shelf (30) for a vehicle, the parcel shelf (30) comprising a plurality of shelf members (32a, 32b), the shelf members (32a, 32b) being movable relative to one another thereby to adjust the width of the parcel shelf (30) between a first position and a second, reduced-width position and **characterised by** biasing means (52a, 52b, 54a, 54b) for biasing the shelf members (32a, 32b) towards the first position.

2. A parcel shelf (30) as claimed in claim 1 further comprising at least one support bar (46, 48) for supporting the shelf members (32a, 32b), the shelf members (32a, 32b) being slidably mounted on the support bar (46, 48) for movement between the first and second positions.

3. A parcel shelf (30) as claimed in claim 2 wherein at least a portion of the or each support bar (46, 48) is located within guide means (34a, 36a) formed in each shelf member (32a, 32b), the guide means (34a, 36a) being arranged to permit relative sliding movement between the shelf members (32a, 32b) and the or each support bar (46, 48).

4. A parcel shelf (30) as claimed in claim 3 wherein the guide means comprises at least one channel (34a, 36a) disposed in the underside of each shelf member (32a, 32b).

5. A parcel shelf (30) as claimed in claim 3 or claim 4 further comprising retaining means for retaining the support bar (46, 48) in the guide means (34a, 36a).

6. A parcel shelf (30) as claimed in claim 5 wherein the retaining means comprises a tube or cylinder disposed within the guide means (34a, 36a) and through which the support bar (46, 48), in use, extends.

7. A parcel shelf (30) as claimed in claim 3 wherein the guide means (34a, 36a) comprises a tube or cylinder formed within each shelf member (32a, 32b).

8. A parcel shelf (30) as claimed in any of claims 3 to 7 wherein the biasing means comprises a compression spring (52a, 52b, 54a, 54b) or the like which acts between the support bar (46, 48) and a respective one of the shelf members (32a, 32b).

9. A parcel shelf (30) as claimed in any preceding claim further comprising locking means for selectively locking the parcel shelf (30) in the first or second positions.

10. A vehicle having a luggage compartment and a parcel shelf (30) according to any one of claims 1 to 9, wherein, in the second position, the width of the parcel shelf (30) is less than or equal to the width of the luggage compartment opening.

## Patentansprüche

1. Gepäckablage (30) für ein Fahrzeug, wobei die Gepäckablage (30) eine Vielzahl von Ablageelementen (32a, 32b) umfasst, wobei die Ablageelemente (32a, 32b) relativ zueinander beweglich sind, um **dadurch** die Breite der Gepäckablage (30) zwischen einer ersten Position und einer zweiten Position mit reduzierter Breite zu verstellen, und **gekennzeichnet ist durch** Vorbelastungsmittel (52a, 52b, 54a, 54b) zum Vorbelasten der Ablageelemente (32a, 32b) zur ersten Position hin.

2. Gepäckablage (30) nach Anspruch 1, weiter umfassend mindestens eine Tragstange (46, 48) zum Tragen der Ablageelemente (32a, 32b), wobei die Ablageelemente (32a, 32b) zur Bewegung zwischen der ersten und der zweiten Position gleitfähig auf der Tragstange (46, 48) angebracht sind.

3. Gepäckablage (30) nach Anspruch 2, wobei mindestens ein Abschnitt der, beziehungsweise jeder Tragstange (46, 48) in Führungsmitteln (34a, 36a) sitzt, die in jedem Ablageelement (32a, 32b) gebildet sind, wobei die Führungsmittel (34a, 36a) dazu angeordnet sind, die relative Gleitbewegung zwischen den Ablageelementen (32a, 32b) und der beziehungsweise jeder Tragstange (46, 48) zuzulassen.

4. Gepäckablage (30) nach Anspruch 3, wobei das Führungsmittel mindestens eine, jeweils in der Unterseite der Ablageelemente (32a, 32b) angeordnete Rille (34a, 36a) umfasst.

5. Gepäckablage (30) nach Anspruch 3 oder Anspruch 4, weiter umfassend Haltemittel zum Halten der Tragstange (46, 48) in den Führungsmitteln (34a, 36a).

6. Gepäckablage (30) nach Anspruch 5, wobei das Haltemittel eine Röhre oder einen Zylinder umfasst die, beziehungsweise der im Führungsmittel (34a, 36a) angeordnet ist und durch die beziehungsweise den sich die Tragstange (46, 48) in Gebrauch erstreckt.

7. Gepäckablage (30) nach Anspruch 3, wobei das Führungsmittel (34a, 36a) eine Röhre oder einen Zylinder umfasst die, beziehungsweise der in jedem Ablageelement (32a, 32b) gebildet ist.

8. Gepäckablage (30) nach einem der Ansprüche 3 bis 7, wobei das Vorbelastungsmittel eine Druckfeder (52a, 52b, 54a, 54b) oder dergleichen umfasst, die zwischen der Tragstange (46, 48) und einem jeweiligen der Ablageelemente (32a, 32b) wirkt.

9. Gepäckablage (30) nach einem der vorangehenden Ansprüche, weiter umfassend Verriegelungsmittel zum selektiven Verriegeln der Gepäckablage (30) in der ersten oder in der zweiten Position.

10. Fahrzeug mit einem Gepäckraum und einer Gepäckablage (30) nach einem der Ansprüche 1 bis 9, wobei in der zweiten Position die Breite der Gepäckablage (30) kleiner oder gleich der Breite der Gepäckraumöffnung ist.

## Revendications

1. Etagère pour colis (30) pour un véhicule, l'étagère pour colis (30) comprenant une pluralité d'éléments d'étagère (32a, 32b), les éléments d'étagère (32a, 32b) étant mobiles les uns par rapport aux autres pour ainsi régler la largeur de l'étagère pour colis (30) entre une première position et une seconde position de largeur réduite, et **caractérisée par** des moyens de chargement préliminaire (52a, 52b, 54a, 54b) pour charger préliminairement les éléments d'étagère (32a, 32b) vers la première position.

2. Etagère pour colis (30) selon la revendication 1, comprenant en outre au moins une barre de support (46, 48) pour supporter les éléments d'étagère (32a, 32b), les éléments d'étagère (32a, 32b) étant montés de façon coulissante sur la barre de support (46, 48) pour se déplacer entre les première et seconde positions.

3. Etagère pour colis (30) selon la revendication 2, dans laquelle au moins une partie de la ou chaque barre de support (46, 48) est située à l'intérieur d'un moyen de guidage (34a, 36a) formé dans chaque élément d'étagère (32a, 32b), le moyen de guidages (34a, 36a) étant agencé de façon à permettre un mouvement coulissant entre les éléments d'étagère (32a, 32b) et la ou chaque barre de support (46, 48).

4. Etagère pour colis (30) selon la revendication 3, dans laquelle le moyen de guidage comprend au moins une gorge (34a, 36a) disposée dans le dessous de chaque élément d'étagère (32a, 32b).

5. Etagère pour colis (30) selon la revendication 3 ou la revendication 4, comprenant en outre un moyen de retenue pour retenir la barre de support (46, 48) dans le moyen de guidage (34a, 36a).

6. Etagère pour colis (30) selon la revendication 5, dans laquelle le moyen de retenue comprend un tube ou cylindre disposé à l'intérieur du moyen de guidage (34a, 36a) et à travers lequel s'étend la barre de support (46, 48) durant l'utilisation.

7. Etagère pour colis (30) selon la revendication 3, dans laquelle le moyen de guidage (34a, 36a) comprend un tube ou cylindre formé à l'intérieur de chaque élément d'étagère (32a, 32b).

8. Etagère pour colis (30) selon l'une quelconque des revendications 3 à 7, dans laquelle le moyen de charge préliminaire comprend un ressort de compression (52a, 52b, 54a, 54b) ou assimilé qui agit entre la barre de support (46, 48) et un élément respectif des éléments d'étagère (32a, 32b).

9. Etagère pour colis (30) selon l'une quelconque des revendications précédentes, comprenant en outre un moyen de verrouillage pour verrouiller sélectivement l'étagère pour colis (30) dans la première ou seconde position.

10. Véhicule comportant un compartiment à bagages et une étagère pour colis (30) selon l'une quelconque des revendications 1 à 9, dans lequel, dans la seconde position, la largeur de l'étagère pour colis (30) est inférieure ou égale à la largeur de l'ouverture du compartiment à bagages.
